# EUROPÄISCHE PATENTSCHRIFT

(11) **EP 0 390 973 B1**
(45) Veröffentlichungstag und Bekanntmachung des Hinweises auf die Patenterteilung: **21.07.1993**
(21) Anmeldenummer: 89123020.3
(22) Anmeldetag: 13.12.1989
(51) Int. Cl.: H02J 13/00, H01C 7/00

(54) **Sendeanordnung zur Übertragung von Informationen über ein elektrisches Versorgungsnetz**
Send device for transporting information on an electrical feeding network
Dispositif émetteur pour l'envoi d'informations sur un réseau d'alimentation électrique

(30) Priorität: 03.04.1989 CH 1213/89
(43) Veröffentlichungstag der Anmeldung: 10.10.1990
(73) Patentinhaber: Landis & Gyr Business Support AG, 6301 Zug (CH)
(72) Erfinder: Adame, Javier, CH-6318 Walchwil (CH); Hrejsa, Jan, CH-6317 Oberwil (CH)

(56) Entgegenhaltungen:
- EP-A- 0 153 488
- EP-A- 0 175 863
- US-A- 4 613 844
- US-A- 4 647 900

## Beschreibung

Die Erfindung bezieht sich auf Sendeanordnung zur Übertragung von Informationen über ein elektrisches Versorgungsnetzes gemäss dem Oberbegriff des Anspruchs 1.

Solche Sendeanordnungen werden vorteilhaft zur Fernablesung von Elektrizitätszählern verwendet, d. h. zur Übertragung z. B. des verbrauchten Energiewertes von den einzelnen Elektrizitätszählern zu einer Zentrale. Derartige Sendeanordnungen sind in der Regel in einem Gehäuse, welches annähernd gleich gross ist wie das Gehäuse eines Elektrizitätszählers, oder im Zählergehäuse selbst untergebracht.

Eine Sendeanordnung der eingangs genannten Art ist aus der US-PS 4 642 637 und aus der US-PS 4 654 630 bekannt. Sie enthält mindestens einen Widerstand, der im Rhythmus der zu übertragenden Signalform ein- und ausgeschaltet wird.

Bereits bei einer Netzspannung von 110 Volt und einem Strom von 2 Ampere entsteht während eines Impulsbetriebs im Widerstand eine Verlustleistung von 110 Watt, wenn die Dauer der Impulse und der Impulslücken als gleich gross angenommen werden. In der Praxis ist die Netzspannung bei einphasigen Energieversorgungsnetzen sogar oft 220 Volt und beträgt der benötigte Widerstandsstrom der Sendeanordnung sogar 3 Ampere, was einer Verlustleistung von 330 Watt entspricht. Widerstände mit einer derart hohen Verlustleistung sind naturgemäss teuer und raumfüllend, so dass sie kaum im oder auf einem Gehäuse angeordnet werden können, welches annähernd gleich gross ist wie das Gehäuse eines Elektrizitätszählers. Ausserdem besitzen die meisten Hochleistungswiderstände, z. B. Drahtwiderstände, nichtvernachlässigbare parasitäre Induktivitäten, die bei den verwendeten hohen Schaltfrequenzen in der Grössenordnung von 15 000 Schaltungen pro Sekunde gefährliche Spannungspitzen verursachen.

Der Erfindung liegt die Aufgabe zugrunde, einen kostengünstigen, induktivitätslosen oder mindestens induktivitätsarmen Leistungswiderstand für derartige Sendeanordnungen zu realisieren, die fähig sind, im Impulsbetrieb und bei kurzzeitigen Belastungen in der Grössenordnung von z. B. 1 Sekunde bis 2 Sekunden die benötigte Sendeleistung der Sendeanordnung auf möglichst kleinem Raum zu erzeugen, der höchstens annähernd gleich gross ist wie das Volumen eines Gehäuses eines Elektrizitätszählers, ohne dass der Leistungswiderstand dabei Schaden nimmt oder sich übermässig erhitzt, und dass die Bauform des Leistungswiderstandes derart ist, dass ein einfacher Einbau in einem derartigen Gehäuse möglich ist. Dabei gilt nachfolgend die Annahme, dass die Dauer der Sendeimpulse annähernd gleich gross ist wie die Dauer der Sendeimpulslücken. Die maximalen Abmessungen des Gehäuses eines Elektrizitätszählers betragen in der Regel annähernd 25cm x 15cm x 8cm.

Die genannte Aufgabe wird erfindungsgemäss durch die im Kennzeichen des Anspruchs 1 angegebenen Merkmale gelöst.

Weiterbildungen der Erfindung ergeben sich aus den Unteransprüchen.

Ausführungsbeispiele der Erfindung sind in der Zeichnung dargestellt und werden im folgenden näher beschrieben.

Es zeigen:
- Fig. 1: ein Schaltbild einer Sendeanordnung,
- Fig. 2: eine Draufsicht eines Dickfilmwiderstandes,
- Fig. 3: einen Querschnitt einer ersten Variante eines erfindungsgemässen Dickfilmwiderstandes,
- Fig. 4: einen Querschnitt einer zweiten Variante des erfindungsgemässen Dickfilmwiderstandes und
- Fig. 5: einen Querschnitt einer dritten Variante des erfindungsgemässen Dickfilmwiderstandes.

Gleiche Bezugszahlen bezeichnen in allen Figuren der Zeichnung gleiche Teile.

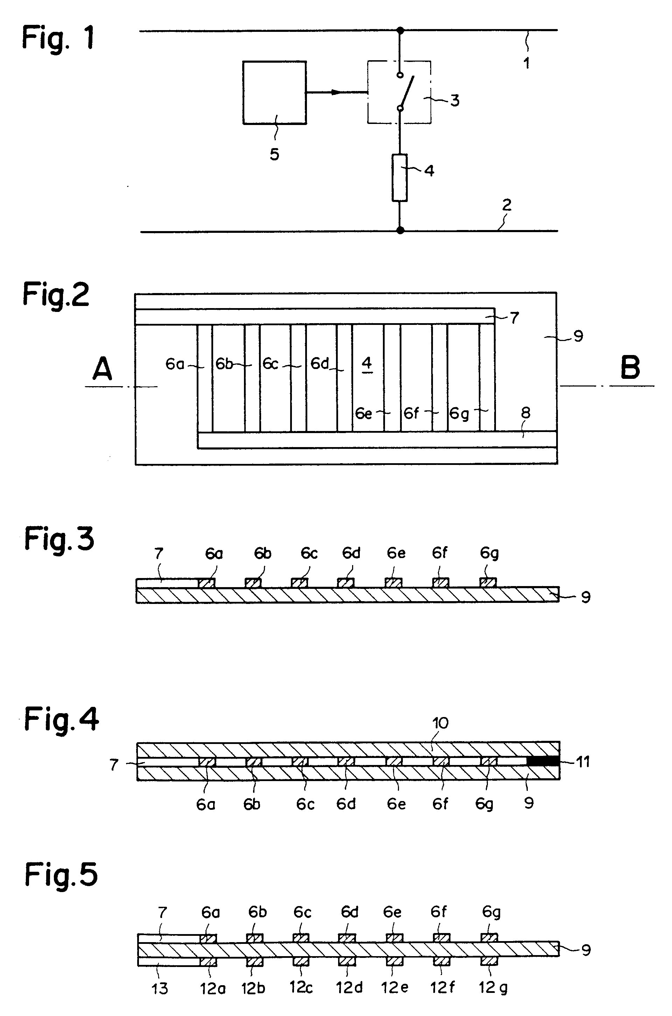

Die in der Fig. 1 dargestellte Sendeanordnung zur Übertragung von Informationen über ein elektrisches Energieversorgungsnetz 1;2, welches einen ersten Leiter 1 und einen zweiten Leiter 2 enthält, besteht aus mindestens einem Schalter 3 und mindestens einem diesen zugehörigen Widerstand 4 sowie aus einem Steuergerät 5. Dabei ist der Steuereingang eines jeden Schalters 3 mit je einem Ausgang des Steuergerätes 5 verbunden, während der Schalter 3 jeweils mit dem ihn zugehörigen Widerstand 4 elektrisch in Reihe geschaltet ist und die so erhaltene Reihenschaltung 3;4 jeweils mit den beiden Leitern 1 und 2 des Energieversorgungsnetzes 1;2 verbunden ist. In der Fig. 1 ist aus Gründen der zeichnerischen Einfachheit nur ein einziger Schalter 3 und ein einziger zugehöriger Widerstand 4 dargestellt, wobei das Steuergerät 5 dann nur einen einzigen Ausgang aufweist. Der detaillierte Aufbau und die Arbeitsweise der Sendeanordnung 3;4;5 ist in der US-PS 4 642 637 und in der US-PS 4 654 630 ausführlich beschrieben.

Eine zu übertragende binäre Signalform wird im Steuergerät 5 erzeugt, welches mindestens einen der Schalter 3 im Rhythmus der zu übertragenden binären Signalform ein- und ausschaltet, wodurch das Energieversorgungsnetz 1;2 in diesem Rhythmus durch den zugehörigen Widerstand 4 belastet und entlastet wird. Jeder Widerstand 4 wirkt somit mittels des zugehörigen Schalters 3 auf das Energieversorgungsnetz 1;2, indem er in demselben Stromimpulse in Gestalt von Stromstössen erzeugt, die von einer nicht dargestellten, am Energieversorgungsnetz 1;2 angeschlossenen Empfangsanordnung z. B. in der Zenterale empfangen und ausgewertet werden können.

Jeder Widerstand 4 ist vorzugsweise ein Dickfilm-Leistungswiderstand, der äusserst flach aufgebaut ist, keine windungsspulenähnliche Windungen aufweist und daher induktivitätsarm oder sogar induktivitätsfrei ist. Der Widerstand 4 ist so aufgebaut und dimensioniert, dass seine Leistungsaufnahme bei kurzzeitigen Belastungen im Impulsbetrieb in der Grössenordnung von mindestens 100 Watt liegt. Bei kurzzeitigen Belastungen von 1 Sekunde bis 2 Sekunden wird die Wärmeenergie sehr schnell auf die ganze und relativ grosse Fläche eines Keramiksubstrates des Dickfilm-Leistungswiderstandes verteilt, so dass eine rasche und gute Wärmeabfuhr erfolgen kann.

Üblicherweise besitzen Dickfilmwiderstände eine rechteckförmige oder meanderförmige Draufsicht. Beide Anordnungen haben den Nachteil, dass, wenn beim Herstellungsverfahren des Dickfilmwiderstandes durch Luftblasen und/oder Unreinheiten ein Engpass in der Leiterbahn des Dickfilmwiderstandes entsteht, durch diesen Engpass der gesamte relativ hohe Strom von 2 Ampere bzw. 3 Ampere fliessen muss. Bedingt durch den so erzeugten überhöhten lokalen Widerstand an der Stelle des Engpasses kann dort eine sehr hohe Erhitzung erzeugt werden, die den Dickfilmwiderstand zerstören kann. Ausserdem ist die Temperaturverteilung bei dieser Art Dickfilmwiderstände unbestimmt, da die Leiterbahn des Dickfilmwiderstandes bedingt durch die Welligkeit des Keramiksubstrats unterschiedliche Dicken aufweist.

Daher ist vorzugsweise, wie in der Draufsicht der Fig. 2 dargestellt, ein Leistungs-Dickfilmwiderstand zu verwenden, der aus mehreren Teilwiderständen 6a, 6b, 6c, 6d, 6e, 6f und 6g besteht, die mittels je eines Kurzschlussleiters 7 bzw. 8 an ihren beiden Enden parallel geschaltet sind. Die Kurzschlussleiter 7 und 8 ermöglichen einerseits die Kontaktierung der Teilwiderstände 6a bis 6g und anderseits die Fixierung der externen Anschlüsse. Engpässe, falls vorhanden, verteilen sich statistisch über alle im gleichen Herstellungsverfahren hergestellten Teilwiderstände, so dass pro Dickfilmwiderstand wahrscheinlich nur höchstens ein einziger Engpass in einem einzigen Teilwiderstand 6a, 6b, 6c, 6d, 6e, 6f bzw. 6g vorhanden ist, durch den, bedingt durch die Parallelschaltung, nur ein Bruchteil des Gesamtstromes fliesst. Die lokale Erhitzung im Engpass ist somit bedeutend kleiner als beim rechteckförmigen und meanderförmigen Dickfilmwiderstand. Die Parallelschaltung der Teilwiderstände 6a bis 6g hat den weiteren Vorteil, dass die erforderlichen, relativ niederohmigen Widerstandswerte 110 Volt/2 Ampere = 55 Ohm bzw. 220 Volt/3 Ampere = 73 Ohm leichter zu verwirklichen sind. Ausserdem entstehen keine grossen Probleme, wenn ein Teilwiderstand 6a, 6b, 6c, 6d, 6e, 6f bzw. 6g defekt ist oder einen erhöhten Widerstand aufweisen sollte, da der Gesamtwiderstand des Dickfilmwiderstandes hauptsächlich durch die vielen andern Teilwiderstände bestimmt ist.

Wie in der Fig. 3 dargestellt, wird üblicherweise ein Dickfilmwiderstand auf einer einzigen Fläche eines elektrisch isolierenden, vorzugsweise aus Keramik bestehenden Substrates 9 angeordnet durch Auftragen einer Widerstandspaste und anschliessender Einbrennung derselben. Um eine grosse Wärmeabfuhr zu gewährleisten, ist vorzugsweise die ganze Fläche des Substrates 9 mit Widerstandspaste zu bedrucken, welche vorzugsweise einen Flachenwiderstandswert von 100 Ohm pro Quadrat aufweist. Zehn in Reihe geschaltete Quadrate ergeben somit einen Widerstandwert von 1000 Ohm für jeden Teilwiderstand 6a bis 6g. Die Parallelschaltung von 20 Teilwiderständen ergibt dann 50 Ohm. Die thermische Belastbarkeit eines Keramiksubstrates ist annähernd 9 Watt/cm², so dass für 330 Watt eine Fläche von annähernd 37cm² erforderlich ist.

In der in der Fig. 3 dargestellten Anordnung erwärmt sich während der Belastung zuerst der obere Teil des Substrates 9. Dadurch dehnt sich der obere Teil mehr aus als der untere Teil, was zu einer einseitigen thermischen und mechanischen Spannungsbelastung führt. Durch diese unsymmetrische Verteilung der Temperaturen und die dadurch bedingten Temperaturdifferenzen, entstehen somit auf kleinstem Raume starke thermische und mechanische Spannungen, die zur Zerstörung des Substrates 9 und damit zur Zerstörung des Dickfilmwiderstandes führen können. Um dies zu vermeiden, wird vorzugsweise eine der beiden in der Fig. 4 bzw. der Fig. 5 dargestellten Anordnungen verwendet.

In der in der Fig. 4 dargestellten Anordnung ist der Dickfilmwiderstand bzw. sind dessen Teilwiderstände 6a bis 6g sowie die Kurzschlussleiter 7 und 8 in der Mitte zwischen zwei elektrisch isolierenden Substrate 9 und 10 angeordnet, die mechanisch miteinander verbunden sind, indem das Substrat 10 das Substrat 9 mit dessen Teilwiderständen 6a bis 6g wie ein Deckel bedeckt. Die Verbindung der beiden Substrate 9 und 10 miteinander erfolgt mittels eines Verbindungsmittels 11, z. B. eines Klebers oder eines Lots, mehr oder weniger entlang der übereinanderliegenden Ränder der beiden Substrate 9 und 10, so dass ein hermetisches Gebilde als Dickfilmwiderstand entsteht. Die Temeraturverteilung im Substratpaar 9;10 ist symmetrisch und die thermischen und mechanischen Kräfte in den beiden Substraten 9 und 10 kompensieren sich bei dieser Anordnung gegenseitig, so dass ein Bruch der Substrate 9 und 10 vermieden wird. Ein weiterer Vorteil ist, dass das Substrat 10 auch als Kühlkörper wirkt, so das ein zusätzlicher Kühlkörper sich erübrigt oder mindestens kleiner dimensioniert werden kann.

In der in der Fig. 5 dargestellten Anordnung besteht der Dickfilmwiderstand aus zwei Gruppen von Teilwiderständen 6a bis 6g und 12a bis 12g. Je eine der beiden Gruppen 6a bis 6g bzw. 12a bis 12g ist auf je eine der beiden Seiten des Substrates 9 angeordnet, so dass das Substrat 9 auf seinen beiden Seiten mit Teilwiderständen 6a bis 6g bzw. 12a bis 12g bedruckt ist. Die beiden Gruppen und damit auch der Dickfilmwiderstand sind dabei symmetrisch zum Substrat 9 auf dessen beiden Seiten angeordnet. Die Draufsicht bzw. Druntersicht der beiden Gruppen ist gleich der Draufsicht der in den Figuren 2 bis 4 dargestellten Anordnungen. Die Teilwiderstände 12a bis 12g sind ebenfalls vorzugsweise mittels zweier Kurzschlussleiter parallel geschaltet, wovon in der Fig. 5 nur ein einziger Kurzschlussleiter 13 dargestellt ist. Die beiden Gruppen sind in diesem Fall vorzugsweise ebenfalls parallel geschaltet, z. B. durch externe, nicht dargestellte Kurzschlussverbindungen. Die einzelnen Teile des Dickfilmwiderstandes, d. h. einerseits die beiden Gruppen und anderseits die Teilwiderstände 6a bis 6g und 12a bis 12g in den einzelnen Gruppen, sind dabei so angeordnet und so elektrisch miteinander verbunden, dass im Betrieb in den zum Substrat 9 symmetrischen Teilen des Dickfilmwiderstandes gleich grosse elektrische Ströme fliessen. Dadurch ist die Temperaturverteilung ebenfalls symmetrisch im Substrat 9 und die thermischen und mechanischen Kräfte heben sich gegenseitig auf, so dass keine Zerstörung des Substrates erfolgen kann.

Die so realisierten Dickfilmwiderstände besitzen eine Grösse von zirka 7cm x 7cm und sind daher leicht in einem Gehäuse in der Grössenordnung des Gehäuses eines Elektrizitätszählers unterzubringen. Um die Kühlwirkung zu erhöhen, werden sie jedoch vorzugsweise unmittelbar auf einer Innenseite oder auf einer Aussenseite des Gehäuses montiert, in das die Sendeanordnung angeordnet ist, so dass das vorzugsweise metallene Gehäuse als Kühlkörper wirken kann.

## Patentansprüche

1. Sendeanordnung (3;4;5) zur Übertragung von Informationen über ein elektrisches Energieversorgungsnetz (1;2) mit einem auf das Energieversorgungsnetz (1;2) wirkenden, mittels eines Schalters (3) ein- und ausschaltbaren Widerstandes (4), dadurch gekennzeichnet, dass der Widerstand (4) ein mindestens auf einer Fläche eines elektrisch isolierenden Substrates (9) angeordneter Dickfilm-Leistungswiderstand ist, dessen Leistungsaufnahme bei kurzzeitiger Belastung im Impulsbetrieb in der Grössenordnung von mindestens 100 Watt liegt und dessen räumliche Abmessungen höchstens annähernd 25 cm x 15 cm x 8 cm gross sind.

2. Sendeanordnung (3;4;5) nach Anspruch 1, dadurch gekennzeichnet, dass der Dickfilm-Leistungswiderstand zwischen zwei elektrisch isolierenden und mechanisch miteinander verbundenen Substraten (9, 10) angeordnet ist.

3. Sendeanordnung (3;4;5) nach Anspruch 1, dadurch gekennzeichnet, dass der Dickfilm-Leistungswiderstand symmetrisch zum Substrat (9) auf beiden Seiten des Substrates (9) räumlich angeordnet ist und einzelne Teile des Dickfilm-Leistungswiderstandes so angeordnet und elektrisch so miteinander verbunden sind, dass im Betrieb in zum Substrat (9) symmetrischen Teilen des Dickfilm-Leistungswiderstandes annähernd gleich grosse elektrische Ströme fliessen.

4. Sendeanordnung (3;4;5) nach einem der Ansprüche 1 bis 3, dadurch gekennzeichnet, dass der Dickfilm-Leistungswiderstand aus mehreren Teilwiderständen (6a, 6b, 6c, 6d, 6e, 6f, 6g bzw. 6a, 6b, 6c, 6d, 6e, 6f, 6g, 12a, 12b, 12c, 12d, 12e, 12f, 12g) besteht, die mittels Kurzschlussleiter (7, 8 bzw. 7, 8, 13) elektrisch parallel geschaltet sind.

5. Sendeanordnung (3;4;5) nach einem der Ansprüche 1 bis 4, dadurch gekennzeichnet, dass die Dickfilm-Leistungswiderstände unmittelbar auf einer Innenseite oder einer Aussenseite eines Gehäuses montiert sind, in dem die Sendeanordnung (3;4;5) angeordnet ist.

## Claims

1. A transmitting arrangement (3; 4; 5) for the transmission of information by way of an electrical energy supply mains system (1; 2) having a resistor (4) which acts on the energy supply mains system (1; 2) and which can be switched on and off by means of a switch (3) characterised in that the resistor (4) is a thick-film power resistor which is arranged at least on a face of an electrically insulating substrate (9) and whose power consumption is of the order of magnitude of at least 100 watts at a short-time loading in the pulse-wise mode of operation and whose spatial dimensions are at most approximately 25 cm x 15 cm x 8 cm.

2. A transmitting arrangement (3; 4; 5) according to claim 1 characterised in that the thick-film power resistor is arranged between two electrically insulating and mechanically interconnected substrates (9, 10).

3. A transmitting arrangement (3; 4; 5) according to claim 1 characterised in that the thick-film power resistor is spatially arranged symmetrically relative to the substrate (9) on both sides of the substrate (9) and individual parts of the thick-film power transistor are so arranged and electrically so connected together that in operation approximately equal electrical currents flow in parts of the thick-film power resistor, which are symmetrical relative to the substrate (9).

4. A transmitting arrangement (3; 4; 5) according to one of claims 1 to 3 characterised in that the thick-film power resistor comprises a plurality of resistor portions (6a, 6b, 6c, 6d, 6e, 6f, 6g and 6a, 6b, 6c, 6d, 6e, 6f, 6g, 12a, 12b, 12c, 12d, 12e, 12f, 12g) which are electrically connected in parallel by means of short-circuit conductors (7, 8 and 7, 8, 13 respectively).

5. A transmitting arrangement (3; 4; 5) according to one of claims 1 to 4 characterised in that the thick-film power resistors are mounted directly on an inside or an outside of a casing in which the transmitting arrangement (3; 4; 5) is arranged.

## Revendications

1. Montage émetteur (3 ; 4; 5) de transmission d'informations par un réseau électrique d'alimentation en énergie (1 ; 2), comprenant une résistance (4) qu'un interrupteur (3) peut brancher et débrancher et qui agit sur le réseau d'alimentation en énergie (1 ; 2), caractérisé en ce que la résistance (4) est une résistance de puissance à couche épaisse disposée sur au moins une surface d'un substrat (9) isolant de l'électricité et dont la consommation d'énergie sous charge de brève durée en régime impulsionnel est de l'ordre de grandeur d'au moins 100 Watts et dont les cotes tridimensionnelles sont au maximum d'environ 25cm x 15cm x 8cm.

2. Montage émetteur (3 ; 4; 5) selon la revendication 1, caractérisé en ce que la résistance de puissance à couche épaisse est disposée entre deux substrats (9, 10) isolants de l'électricité et reliés mécaniquement l'un à l'autre.

3. Montage émetteur (3 ; 4 ; 5) selon la revendication 1, caractérisé en ce que la résistance de puissance à couche épaisse est disposée symétriquement dans l'espace par rapport au substrat (9) sur les deux côtés du substrat (9) et des parties individuelles de la résistance de puissance à couche épaisse sont disposées et connectées électriquement les unes aux autres de manière qu'en service, des courants électriques à peu près d'une même valeur circulent dans les parties de la résistance de puissance à couche épaisse qui sont symétriques par rapport au substrat (9).

4. Montage émetteur (3 ; 4 ;5) selon l'une des revendications 1 à 3, caractérisé en ce que la résistance de puissance à couche épaisse se compose de plusieurs éléments de résistance (6a, 6b, 6c, 6d, 6e, 6f, 6g ainsi que 6a, 6b, 6c, 6d, 6e, 6f, 6g, 12, 12b, 12c, 12d, 12e, 12f, 12g) qui sont branchés électriquement en parallèle au moyen de conducteurs de court-circuit (7, 8 ainsi que 7, 8, 13).

5. Montage émetteur (3 ; 4; 5) selon l'une des revendications 1 à 4, caractérisé en ce que les résistances de puissance à couche épaisse sont montées directement sur un côté intérieur ou un côté extérieur d'un boîtier dans lequel le montage émetteur (3 ; 4; 5) est disposé.
